# EUROPEAN PATENT SPECIFICATION

(11) **EP 2 411 742 B1**
(45) Date of publication and mention of the grant of the patent: **19.09.2018**
(21) Application number: 10756420.5
(22) Date of filing: 18.03.2010
(51) Int. Cl.: F24F 13/14, F16K 1/22, F16K 47/04

(54) **AIR FLOW REGULATING DEVICE**
VORRICHTUNG ZUR LUFTSTROMREGULIERUNG
DISPOSITIF DE RÉGULATION D'ÉCOULEMENT D'AIR

(30) Priority: 27.03.2009 SE 0900399
(43) Date of publication of application: 01.02.2012
(73) Proprietor: Inventiair AB, 115 26 Stockholm (SE)
(72) Inventor: SELLÖ, Bengt, S-114 48 Stockholm (SE); SELLÖ, Martin, S-114 40 Stockholm (SE)
(74) Representative: Modin, Jan
(86) International application number: PCT/SE2010/050304
(87) International publication number: WO 2010/110723

(56) References cited:
- EP-A1- 0 924 475
- WO-A1-00/01991
- DE-A1- 10 141 158
- DE-U1- 29 505 070
- FI-B- 87 835
- SE-B- 433 258
- US-B1- 6 273 141

## Description

### Technical field

The present invention relates to an air flow regulating device for controlling air flow in an air supply device, or more particularly to a device according to the preamble of claim 1. The invention also relates to an air supply system provided with such an air flow regulating device.

### Background of the Invention

Air supply systems or ventilation systems are commonly used in private and public buildings, as well as in vehicles and vessels, such as air crafts and ships. Typically, an air supply system comprises one or more fans connected via air supply ducts to one or more air supply devices for blowing air into a room. The purpose of the air supply system is to replace the existing air in the room, which may be too cold or too warm, or may contain impurities, and therefore reduces the comfort for persons staying in the room.

To regulate the air flow supplied to the air supply devices, an air flow regulating device is usually mounted in a duct portion for feeding air through the air supply device. The purpose of the air flow regulating device is to supply a desired air flow to the air supply device for the proper functioning of the same. An air supply device of this kind is described in the Swedish patent application SE0900359-1.

The document SE9802372-4 discloses an air supply device comprising a rotatable damper blade, which is rotatable from a closed position to an open position at a predetermined angle. Furthermore, the damper blade is rotatable back to the closed position, and also to be automatically positioned in any intermediate positions while being controlled by a thermal device coupled to said damper blade.

Furthermore, FI87835C discloses a rotatable damper blade for use in a ventilation duct system, where the damper blade may be perforated. Normally, the blade is set at an angle relative to the longitudinal direction of a duct, so that a desired air flow is obtained.

### Summary of the Invention

An object of the present invention is to provide an alternative solution to the problem of controlling the air flow in an air supply device. It is another object of the invention to reduce turbulence and noise in the air flowing through the regulating device.

According to the present invention the above mentioned objects are achieved by an air flow regulating device, mounted in a duct portion being connected, during operation thereof, to an air supply device, comprising a damper blade being rotatably arranged in said duct portion and having a number of apertures in the form of curved collars protruding in the direction of the air flow, said damper blade being movable by means of an actuating device, wherein the damper blade is operable in two modes only, namely:
- a first mode of operation in which said damper blade is fully open, being substantially parallel to the direction of the air flow in said duct portion and thereby permitting a high air flow through said duct portion; and
- a second mode of operation in which said damper blade is fully closed, being positioned substantially at right angle to the direction of the air flow in said duct portion, and is sealed against the inside of said duct portion at the circumference thereof, so that air only flows through said apertures, thereby only permitting a low air flow, no more than 10-40% of said high air flow, through said duct portion,
wherein said actuating device is adapted to switch the damper blade into either one of said fully open and said fully closed positions, there being no intermediate operative position of said damper blade therebetween, and
wherein said apertures are circular in shape, having a diameter of 11-15 mm, and are arranged in a regular pattern on said damper blade, each of said apertures being defined by a smoothly tapering collar which tapers all the way through the damper blade in the air flow direction, so that an angle between a tangent to the curvature of the collar at the collar end at the upstream side and a line parallel to the collar end is less than 90°.

Various embodiments of an air flow regulating device and an air supply system according to the invention are disclosed in the dependent claims 2-9.

An advantage with an air flow regulating device according to the present invention is that the damper only operates in two well defined positions, and is therefore easy to set in either one of these positions. It is also easy to manufacture the device due to the fact no consideration has to be taken to any intermediate positions for the damper. Energy savings are possible with the device, since only a low air flow is permitted through the device in its normally closed position. Also, with the device according to the invention, reduced turbulence is obtained in the air flow regulating device, and therefore, also the noise from the device is kept at a low level.

Other advantages and applications of the present invention will be apparent from the following detailed description of embodiments of the invention.

### Brief description of the Drawings

The appended drawings are intended to clarify and explain the present invention in which:
- Figure 1 schematically shows an embodiment of an air supply system according to the present invention;
- Figure 2A shows, in a perspective view, an embodiment of a flow regulating device according to the invention in a second mode of operation;
- Figure 2B shows, in a perspective view, the embodiment of the flow regulating device in Figure 2A in a first mode of operation;
- Figure 2C shows a longitudinal section (in a top view) through a flow regulating device according to the invention in the second mode of operation;
- Figure 2D shows a longitudinal section (in a top view) through a flow regulating device according to the invention in the first mode of operation;
- Figure 3A shows a circular aperture defined by a collar in a front view; and
- Figure 3B shows in cross section the aperture in Figure 3A.

### Detailed description of embodiments of the Invention

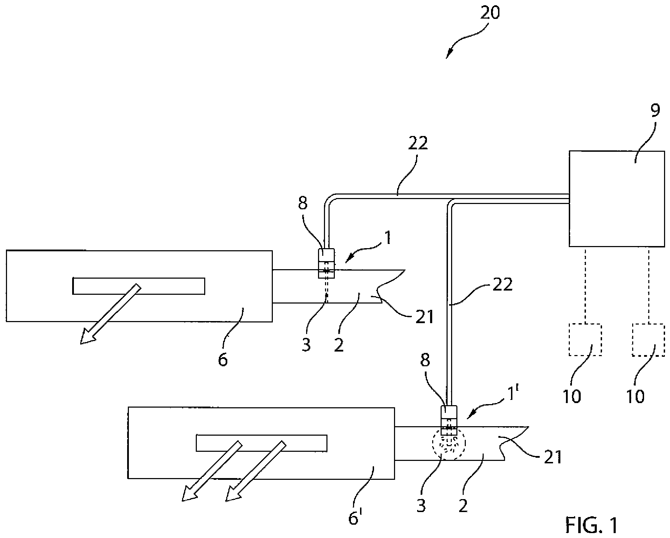

Figure 1 shows schematically an embodiment of an air supply system 20 according to the invention for buildings, vehicles or vessels. The air supply system 20 comprises, in this particular embodiment, two air supply devices 6, 6' for blowing air into a room (not shown in Figure 1). The air supply devices 6, 6' are connected to an air duct system 21, of which only a part is shown in Figure 1, for supplying air to the air supply devices 6, 6'.

Two flow regulating devices 1, 1' according to the invention are mounted in a duct portion 2 of air ducts 21 supplying air to the air supply devices 6, 6'. The system further comprises a control device 9 and two adjustment devices 10, which will be explained in more detail in the following disclosure.

In Figure 1, the upper left air flow regulating device 1 operates in a second mode of operation, while the lower right air flow regulating device 1' operates in a first mode of operation, so the air flow from the air supply device 6 connected to the upper left air flow regulating device 1 is substantially lower than the air flow from the air supply device 6' connected to the lower right air flow regulating device 1'.

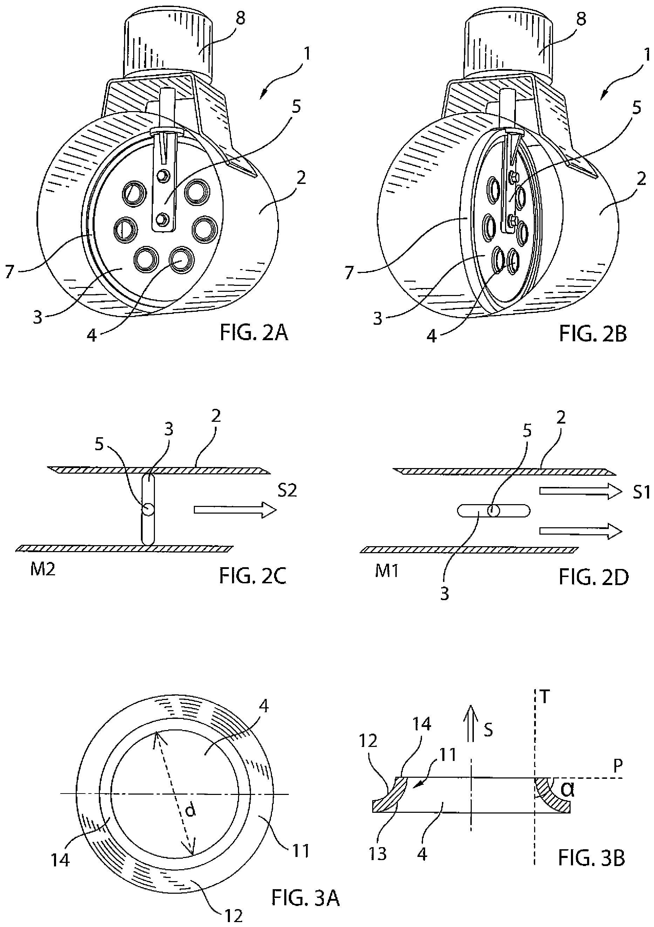

Figures 2A and 2B show, in a perspective views, an air flow regulating device 1 in a first and second mode of operation, respectively. The air flow regulating device 1 comprises a duct portion 2 which is part of (e.g. integrated), or mounted in connection with, the air supply devices 6, 6' as shown in Figure 1. A blade damper 3 is rotatably arranged in the duct portion 2 by means an actuating device 5, 8 fastened to the damper 3 by means of screws, but other fastenings means such as nuts and bolts, rivets, welding or glue can be used. Blade dampers with a diameter in the interval of 90.0 mm or 130.0 mm (provided with 4-10 apertures 4) made of sheet metal have proved to work well in tests, but other diameters of the damper 3 are of course possible, depending on the inside diameter of the duct portion 2 used together with the air flow regulating device 1. According to an embodiment of the invention, the damper 3 is lacquered, e.g. with powder coating, to reduce turbulence in the air flow regulating device 1, and therefore also the noise generated in the device 1.

To seal the damper 3 against the inside of the duct portion 2, when the damper 3 is in closed position, a sealing element 7 in the form of a circular rubber or soft plastic ring is arranged around the circumference of the blade damper 3. Without the sealing element 7 the turbulence and the noise in the flow regulating devices 1 increases while the performance is reduced. The noise from such a high velocity air supply system can be substantial, since the air can have a velocity of 2-5 m/s or even higher in these types of air ducts.

The flow regulating device 1 comprises an actuating device 5, 8 with a setting element 8 connected to a rotatable holding element 5 for rotating and holding the damper 3 between the closed and open positions. The setting element 8 may include a knob or handle for manual operation of the damper 6 through the rotatable holding element 5, but may in another embodiment comprise an electrical motor for operation of the damper 3 through the rotatable holding element 5, and the electrical motor may in turn be controlled by the control device 9 as shown in Figure 1.

Figures 2C and 2D, which correspond to Figures 2A and 2B, respectively, show the air flow regulating device 1 in a longitudinal section through the duct portion 2 in a top view. In Figure 2C, the damper 3, which is fastened by means of the rotatable holding element 5 in the duct portion 2, is positioned substantially at right angle to the air flow, and only a low air flow (S2) through the air flow regulating device 1 is permitted since the air is only permitted to flow through the one or more apertures 4 in the direction of the arrow. In Figure 2D, the damper 3 is in a position substantially parallel to the air flow thereby permitting a high air flow (S1) through the air flow regulating device 1 in the direction of the arrows to an air supply device 6 not shown in Figure 2C and 2D.

One or more tapered, circular apertures 4 are arranged in a regular pattern on the damper 3, thereby only permitting a low air flow (S2) through the damper 3 when it is in the fully closed position. Figure 3A shows an aperture 4 in a larger scale, in a front view, and Figure 3B shows the tapered aperture 4 in Figure 3A in a cross sectional view. Apertures 4 with a diameter d of 11.0 mm and arranged in a circle on the damper 3 have been tested and have proven to be suitable. Other apertures 4 with a diameter d in the interval of 11-15 mm have also been effective. The air velocity through these types of apertures 4 may be in the interval of 8-14 m/s.

A smoothly curved collar 11, as shown in Figure 3A and 3B, defines the tapered aperture 4. The collar 11 protrudes in the direction of the air flow through the air flow regulating device 1, and has an upstream side 13 and a congruent downstream side 12, and therefore geometrically forms a part of a circular ring (e.g. with an inner radius of 4.55 mm if the diameter of the aperture is 11.0 mm). Collars 11 with the desired form, as described, can be obtained by punching holes in a damper 3 of sheet metal using appropriate punching tools.

From Figure 3B, it can be seen that the collar 11 is cut off defining a collar end 14 in the air flow direction S. It has been shown in tests that for good performance the aperture 4 inside the collar 11 should be tapered all the way through the damper in the air flow direction, which means that an angle α defining the angle between a tangent T to the curvature of the collar 11 at the collar end 14 (at the upstream side) and a line P parallel to the collar end 14 should be less than 90°.

Under normal conditions, the air flow regulating device 1 operates in the second mode of operation (M2), i.e. the damper 3 is fully closed (as shown in Figure 2A and 2C), and air is only permitted to flow through the one or more apertures 4. Accordingly, a low air flow (S2) is obtained through the air flow regulating device 1. If triggered, the air flow regulating device 1 is switched to the first mode of operation (M1), and the damper is fully open allowing a high air flow (S1) through the air flow regulating device 1. Therefore, the air flow regulating device 1 according to the invention will operate in only one of the two modes of operation described above, and hence the damper 3 must be fully closed or fully open. No intermediate positions are allowed between these two positions. It is also important that the low air flow S2 should not be greater than half of the high air flow S1, and preferably between 10-40% of the high air flow S1 for good performance.

In Figures 2A and 2B, the damper 3 has six apertures 4; a configuration which has shown good performance when the damper 3 has a diameter of 125.0 mm. Other tests have shown that if the damper 3 has a diameter of 100.00 mm, then a configuration with four apertures 4 is suitable.

In the air supply system 20 shown in Figure 1, each air flow regulating device 1, 1' is arranged to be operably coupled to a control device 9 for controlling the two air flow regulating devices 1, 1'. The communication can e.g. be performed by means of a signal cable 22 on which the control device 9 transmits control signals to an electrical motor in the actuating device 5, 8 for triggering the opening or closing of the damper 3.

The control device 9 is also operably coupled to one or more adjustment devices 10 (of which two are shown in Figure 1 with dotted lines), such as temperature sensors for detecting the presence of person (s) in a room (e.g. IR sensors or a movement detector), or manually operated switches. The function of the adjustment device 10 is to trigger an adjustment signal to said control devices 9, so that the air flow regulating device 1, 1' switches between the two modes of operation, depending on the control signal from the control device 9. For normal conditions, the air flow regulating device 1, 1' will operate in the second mode of operation (M2), but will switch into the first mode of operation (M1) when triggered by the adjustment device 10 via the control device 9. The system 20 can also be implemented so that, when the air flow regulating device 1, 1' switches into the first mode of operation (M1), it automatically switches back to the second mode of operation (M2) after a predetermined time, e.g. after 2-4 hours, using a timer.

## Claims

1. Air flow regulating device (1) comprising a duct portion (2) being connectable, during operation thereof, to an air supply device (6) for controlling the flow of air being fed to said air supply device (6), said device further comprising a damper blade (3) being rotatably arranged in said duct portion (2) and having a number of apertures (4) in the form of curved collars (11) protruding in the direction of the air flow, said damper blade (3) being movable by means of an actuating device (5, 8), **characterized in that** said damper blade (3) is operable in two modes only, namely:
- a first mode of operation (M1) in which said damper blade (3) is fully open, being substantially parallel to the direction of the air flow in said duct portion (2) and thereby permitting a high air flow (S1) through said duct portion; and
- a second mode of operation (M2) in which said damper blade (3) is fully closed, being positioned substantially at right angle to the direction of the air flow in said duct portion (2), and is sealed against the inside of said duct portion (2) at the circumference thereof, so that air only flows through said apertures (4), thereby only permitting a low air flow (S2), no more than 10-40% of said high air flow (S1), through said duct portion (2),
wherein said actuating device (5, 8) is adapted to switch the damper blade (3) into either one of said fully open and said fully closed positions, there being no intermediate operative position of said damper blade (2) therebetween, and
wherein said apertures (4) are circular in shape, having a diameter of 11-15 mm, and are arranged in a regular pattern on said damper blade (3), each of said apertures (4) being defined by a smoothly tapering collar which tapers all the way through the damper blade (3) in the air flow direction, so that an angle (α) between a tangent (T) to the curvature of the collar (11) at the collar end (14) at the upstream side and a line (P) parallel to the collar end (14) is less than 90°.

2. Air flow regulating device (1) according to claim 1, wherein said apertures (4) are punched holes.

3. Air flow regulating device (1) according to claim 1, wherein said damper blade (3) is substantially circular in shape, and said actuating device (5, 8) comprises a rotatable holding element (5) for holding said damper blade, so that said damper blade (3) is rotatable in said duct portion (2) between said fully open and said fully closed positions.

4. Air flow regulating device (1) according to claim 3, wherein said blade damper (3) has a diameter of 90-130 mm, and is provided with 4-10 apertures (4).

5. Air flow regulating device (1) according to claim 1, wherein said actuating device (5, 8) comprises a setting element (8) for switching said damper (3) between said fully open and said fully closed positions.

6. Air flow regulating device (1) according to claim 5, wherein said setting element (8) includes a manually operable knob and/or an electrical motor.

7. Air flow regulating device (1) according to claim 1, wherein said duct portion (2) and said damper blade (3) are made of sheet metal provided with a lacquer coating.

8. Air supply system (20) comprising at least one air flow regulating device (1) according to claim 1, said air supply system (20) further comprising:
- at least one control device (9) operably coupled to said at least one air flow regulating device (1); and
- at least one adjustment device (10) operably coupled to said at least one control device (9) for providing an adjustment signal to the same, so that said air flow regulating device (1) is switched from said first (M1) into said second mode (M2) of operation, or vice versa.

9. Air supply system (20) according to claim 8, wherein said adjustment device (10) is a temperature sensor and/or a manually operated switch and/or a sensor for detecting the presence of persons in a room.

## Patentansprüche

1. Vorrichtung zur Luftstromregulierung (1), die einen Leitungsabschnitt (2) umfasst, der mit einer Luftzufuhrvorrichtung (6) während ihres Betriebs verbindbar ist, um den Luftstrom, welcher der Luftzufuhrvorrichtung (6) zugeführt wird, zu steuern, wobei die Vorrichtung ferner ein Klappenblatt (3) umfasst, das drehbar im Leitungsabschnitt (2) angeordnet ist und mehrere Öffnungen (4) in Form gewölbter Ringe (11) aufweist, die in die Richtung des Luftstroms vorstehen, wobei das Klappenblatt (3) mittels einer Betätigungsvorrichtung (5, 8) bewegbar ist, **dadurch gekennzeichnet, dass** das Klappenblatt (3) nur in zwei Arten betreibbar ist:
- einer ersten Betriebsart (M1), in der das Klappenblatt (3) vollständig geöffnet ist, wobei es im Wesentlichen parallel zu der Richtung des Luftstroms in dem Leitungsabschnitt (2) steht, wodurch es einen starken Luftstrom (S1) durch den Leitungsabschnitt zulässt; und
- einer zweiten Betriebsart (M2), in der das Klappenblatt (3) vollständig geschlossen ist, wobei es im Wesentlichen rechtwinklig zur Richtung des Luftstroms in dem Leitungsabschnitt (2) angeordnet ist, und in der es mit seinem Umfang an der Innenseite des Leitungsabschnitts (2) dicht abschließt, so dass Luft nur durch die Öffnungen (4) strömt, wodurch es nur einen schwachen Luftstrom (S2), nicht mehr als 10 bis 40 % des starken Luftstroms (S1), durch den Leitungsabschnitt (2) zulässt,
wobei die Betätigungsvorrichtung (5, 8) geeignet ist, das Klappenblatt (3) entweder in die vollständig geöffnete oder in die vollständig geschlossene Position zu bringen, da keine Betriebsposition des Klappenblatts (2) zwischen diesen Positionen vorhanden ist, und
wobei die Öffnungen (4) kreisförmig mit einem Durchmesser von 11 bis 15 mm sind und in einem regelmäßigen Muster auf dem Klappenblatt (3) angeordnet sind, wobei jede der Öffnungen (4) durch einen sich gleichmäßig verjüngenden Ring definiert ist, der sich die ganze Strecke durch das Klappenblatt (3) in der Richtung des Luftstroms derart verjüngt, dass ein Winkel (α) zwischen einer Tangente (T) an der Krümmung des Rings (11) am Ringende (14) auf der stromaufwärtigen Seite und einer Linie (P) parallel zu dem Ringende (14) kleiner als 90° ist.

2. Vorrichtung zur Luftstromregulierung (1) nach Anspruch 1, wobei es sich bei den Öffnungen (4) um Stanzlöcher handelt.

3. Vorrichtung zur Luftstromregulierung (1) nach Anspruch 1, wobei das Klappenblatt (3) im Wesentlichen kreisförmig ist und die Betätigungsvorrichtung (5, 8) ein drehbares Halteelement (5) zum Halten des Klappenblatts umfasst, so dass das Klappenblatt (3) in dem Leitungsabschnitt (2) zwischen der vollständig geöffneten und der vollständig geschlossenen Position drehbar ist.

4. Vorrichtung zur Luftstromregulierung (1) nach Anspruch 3, wobei das Klappenblatt (3) einen Durchmesser von 90 bis 130 mm aufweist und mit 4 bis 10 Öffnungen (4) ausgestattet ist.

5. Vorrichtung zur Luftstromregulierung (1) nach Anspruch 1, wobei die Betätigungsvorrichtung (5, 8) ein Einstellelement (8) umfasst, um einen Wechsel der Klappe (3) zwischen der vollständig geöffneten und der vollständig geschlossenen Position zu bewirken.

6. Vorrichtung zur Luftstromregulierung (1) nach Anspruch 5, wobei das Einstellelement (8) einen manuell betätigbaren Knopf und/oder einen Elektromotor aufweist.

7. Vorrichtung zur Luftstromregulierung (1) nach Anspruch 1, wobei der Leitungsabschnitt (2) und das Klappenblatt (3) aus Metallblech hergestellt sind, das mit einer Lackbeschichtung ausgestattet ist.

8. Luftzufuhrsystem (20), das mindestens eine Vorrichtung zur Luftstromregulierung (1) nach Anspruch 1 umfasst, wobei das Luftzufuhrsystem (20) ferner Folgendes umfasst:
- mindestens eine Steuervorrichtung (9), die mit der mindestens einen Vorrichtung zur Luftstromregulierung (1) wirkverbunden ist;
- mindestens eine Einstellvorrichtung (10), die mit der mindestens einen Steuervorrichtung (9) wirkverbunden ist, um dieser ein Einstellsignal bereitzustellen, so dass ein Wechsel der Vorrichtung zur Luftstromregulierung (1) von der ersten Betriebsart (M1) in die zweite Betriebsart (M2), oder umgekehrt, bewirkt wird.

9. Luftzufuhrsystem (20) nach Anspruch 8, wobei es sich bei der Einstellvorrichtung (10) um einen Temperatursensor und/oder einen manuell betätigbaren Schalter und/oder einen Sensor zum Erkennen der Anwesenheit von Personen in einem Raum handelt.

## Revendications

1. Dispositif de régulation du débit d'air (1) comprenant une partie de conduit (2) qui peut être raccordée, en fonctionnement, à un dispositif d'alimentation en air (6) afin de réguler le débit de l'air qui alimente ledit dispositif d'alimentation en air (6), ledit dispositif comprenant en outre un clapet (3) qui est agencé avec faculté de rotation dans ladite partie de conduit (2) et qui comprend un certain nombre d'ouvertures (4) sous forme de collerettes (11) incurvées saillant dans la direction du flux d'air, ledit clapet (3) étant mobile au moyen d'un dispositif d'actionnement (5, 8), **caractérisé en ce que** ledit clapet (3) peut être actionné dans deux modes seulement, à savoir :
- un premier mode de fonctionnement (M1) dans lequel ledit clapet (3) est complètement ouvert, étant sensiblement parallèle à la direction du flux d'air dans ladite partie de conduit (2), et permettant ainsi d'obtenir un débit d'air élevé (S1) dans ladite partie de conduit ; et
- un second mode de fonctionnement (M2) dans lequel ledit clapet (3) est complètement fermé, étant placé sensiblement à angle droit par rapport à la direction du flux d'air dans ladite partie de conduit (2), et est apposé de manière étanche contre l'intérieur de ladite partie de conduit (2) sur sa périphérie, de telle sorte que l'air ne s'écoule que par lesdites ouvertures (4), permettant ainsi de n'obtenir qu'un débit d'air faible (S2), n'excédant pas 10 à 40 % dudit débit d'air élevé (S1), dans ladite partie de conduit,
dans lequel ledit dispositif d'actionnement (5, 8) est conçu pour commuter le clapet (3) dans l'une desdites positions complètement fermée ou complètement ouverte, sans aucune position fonctionnelle intermédiaire entre les deux, et dans lequel lesdites ouvertures (4) sont de forme circulaire, et présente un diamètre compris entre 11 et 15 mm, et sont agencées selon un motif régulier sur ledit clapet (3), chaque ouverture (4) étant définie par une collerette de section progressivement décroissante qui décroit dans l'épaisseur du clapet (3) dans la direction du flux d'air, de telle sorte qu'un angle (α) entre une tangente (T) à la courbure de la collerette (11) au niveau de l'extrémité de la collerette (14) du côté amont et une ligne (P) parallèle à l'extrémité de la collerette (14) est inférieur à 90°.

2. Dispositif de régulation du débit d'air (1) selon la revendication 1, dans lequel lesdites ouvertures (4) sont des trous poinçonnés.

3. Dispositif de régulation du débit d'air (1) selon la revendication 1, dans lequel ledit clapet (3) est de forme sensiblement circulaire, et ledit dispositif d'actionnement (5, 8) comprend un élément de support rotatif (5) pour supporter ledit clapet, de telle sorte que ledit clapet (3) puisse tourner dans ladite partie de conduit (2) entre lesdites positions complètement ouverte et complètement fermée.

4. Dispositif de régulation du débit d'air (1) selon la revendication 3, dans lequel ledit clapet (3) a un diamètre compris entre 90 et 130 mm, et est pourvu de 4 à 10 ouvertures (4).

5. Dispositif de régulation du débit d'air (1) selon la revendication 1, dans lequel ledit dispositif d'actionnement (5, 8) comprend un élément de réglage (8) pour commuter ledit clapet (3) entre lesdites positions complètement ouverte et complètement fermée.

6. Dispositif de régulation du débit d'air (1) selon la revendication 5, dans lequel ledit élément de réglage (8) comprend un bouton manuel et/ou un moteur électrique.

7. Dispositif de régulation du débit d'air (1) selon la revendication 1, dans lequel ladite partie de conduit (2) et ledit clapet (3) sont faits d'une feuille de métal pourvue d'un revêtement de vernis.

8. Système d'alimentation en air (20) comprenant au moins un dispositif de régulation du débit d'air (1) selon la revendication 1, ledit système d'alimentation en air (20) comprenant en outre :
- au moins un dispositif de commande (9) fonctionnellement couplé audit au moins un dispositif de régulation du débit d'air (1) ; et
- au moins un dispositif d'ajustement (10) fonctionnellement couplé audit au moins un dispositif de commande (9) pour lui envoyer un signal d'ajustement, de telle sorte que ledit dispositif de régulation du débit d'air (1) soit commuté dudit premier (M1) audit second (M2) mode de fonctionnement, ou vice versa.

9. Système d'alimentation en air (20) selon la revendication 8, dans lequel ledit dispositif d'ajustement (10) est un capteur de température et/ou un commutateur manuel et/ou un capteur de détection de présence de personnes dans une pièce.
